# FASCICULE DE BREVET EUROPEEN

(11) **EP 3 030 460 B1**
(45) Date de publication et mention de la délivrance du brevet: **10.05.2017**
(21) Numéro de dépôt: 14748248.3
(22) Date de dépôt: 18.07.2014
(51) Int. Cl.: B60R 5/04

(54) **TABLETTE POUR COFFRE DE VÉHICULE AUTOMOBILE**
ABDECKANORDNUNG FÜR EINEN LADERAUM EINES KRAFTFAHRZEUGS
SHELF FOR A MOTOR VEHICLE BOOT

(30) Priorité: 06.08.2013 FR 1357822
(43) Date de publication de la demande: 15.06.2016
(73) Titulaire: Renault s.a.s., 92100 Boulogne-Billancourt (FR)
(72) Inventeur: BOUILLON, Jean-charles, F-78940 La Queue les Yvelines (FR)
(86) Numéro de dépôt international: PCT/FR2014/051853
(87) Numéro de publication internationale: WO 2015/018998

(56) Documents cités:
- FR-A1- 2 565 176
- US-A- 5 865 497

## Description

La présente invention concerne un coffre de véhicule automobile avec une tablette.

Dans les véhicules automobiles comprenant une porte arrière, telle qu'un hayon donnant accès au coffre dudit véhicule, il est connu d'utiliser une tablette mobile permettant de dissimuler le volume du coffre situé entre le siège arrière et ce hayon.

Une telle tablette est apte à coopérer avec le hayon par l'intermédiaire d'un système d'attache de façon à ce qu'elle puisse réaliser un mouvement visant à dégager l'ouverture du coffre lorsque le hayon est manoeuvré et faciliter ainsi l'accès à ce coffre.

Un tel système d'attache permet de relier cette tablette au hayon par l'intermédiaire d'une attache, de type cordelette, dont une première extrémité est fixée à la tablette mobile et une deuxième extrémité au hayon de ce véhicule.

Cette cordelette est généralement reliée au hayon par un crochet solidement fixé dans la tôle du hayon par vissage ou clippage. Le crochet peut également être constitué par une languette de tôle pliée issue de la structure du hayon. FR2565176 A décrit un coffre de véhicule automobile avec une tablette selon le préambule de la revendication 1. Certaines tablettes, pour des raisons de gain de masse, sont souvent constituées par des matériaux légers tels que de la toile tendue sur un cadre rigide par exemple. Cependant, de telles tablettes sont plus fragiles que des tablettes classiques. Ainsi, dans le cas où des objets lourds (plus de 500g) sont posés sur la tablette, cette dernière risque de se déformer de manière irréversible ou de se briser sous l'effet du poids appliqué.

La présente invention vise à résoudre ces problèmes résultant des inconvénients de l'état de l'art.

Dans ce dessein, l'invention concerne une tablette pour coffre de véhicule automobile comportant un bord avant monté pivotant autour d'un axe transversal et des coins arrière comportant des moyens d'attache reliés à un ouvrant de coffre, la tablette étant apte à passer, lorsque l'ouvrant est ouvert, d'une position horizontale d'utilisation à une position relevée par une rotation vers le haut autour de l'axe transversal, les moyens d'attache étant conformés pour se détacher lorsqu'une charge dont la masse est supérieure à un seuil prédéfini est appliquée sur la tablette de façon que la tablette passe de sa position d'utilisation à une position abaissée par une rotation vers le bas autour de l'axe transversal.

Dans d'autres modes de réalisation :
- chaque moyen d'attache est constitué par un cordon dont une première extrémité est reliée à un coin de la tablette et une deuxième extrémité est reliée à un élément d'accrochage apte à être monté sur une tête de vérin d'ouvrant de coffre ;
- l'élément d'accrochage comporte un corps présentant une extrémité depuis laquelle s'étend une partie de connexion apte à coopérer avec la tête de vérin et une extrémité opposée depuis laquelle s'étend une partie de retenue apte à coopérer avec l'extrémité du cordon ;
- la partie de connexion est formée par deux bras élastiquement déformables s'étendant en arcs de cercle dans un plan et présentant des extrémités délimitant une ouverture, les bras étant aptes à enserrer le col lorsque le poids appliqué à la tablette est inférieur à un seuil prédéfini;
- les extrémités des bras comportent un retour tourné vers l'extérieur formant des moyens de guidage ;
- une face interne des bras comporte des butées de contact aptes à coopérer avec une surface du col de tête de vérin ;
- les butées présentent la forme d'une portion de cylindre d'axe perpendiculaire au plan dont les extrémités sont en saillie par rapport à une face latérale des bras et présentent une forme semi-sphérique de façon à être aptes à entrer en contact avec une face d'extrémité du fût du vérin, et
- la partie de retenue est constituée par des parois sensiblement perpendiculaires au corps et formant entre elles une gorge apte à recevoir une extrémité en forme de boucle du cordon.

L'invention concerne également un véhicule comportant une telle tablette.

D'autres avantages et caractéristiques de l'invention apparaîtront mieux à la lecture de la description d'un mode de réalisation préféré qui va suivre, en référence aux figures ci-dessous, réalisé à titre d'exemple indicatif et non limitatif :
- la figure 1 représente une tablette munie des moyens d'accrochage selon l'invention, représentée en position normale d'utilisation et en position détachée ;
- la figure 2 représente un élément d'accrochage pour une attache d'une tablette selon ce mode de réalisation de l'invention ;

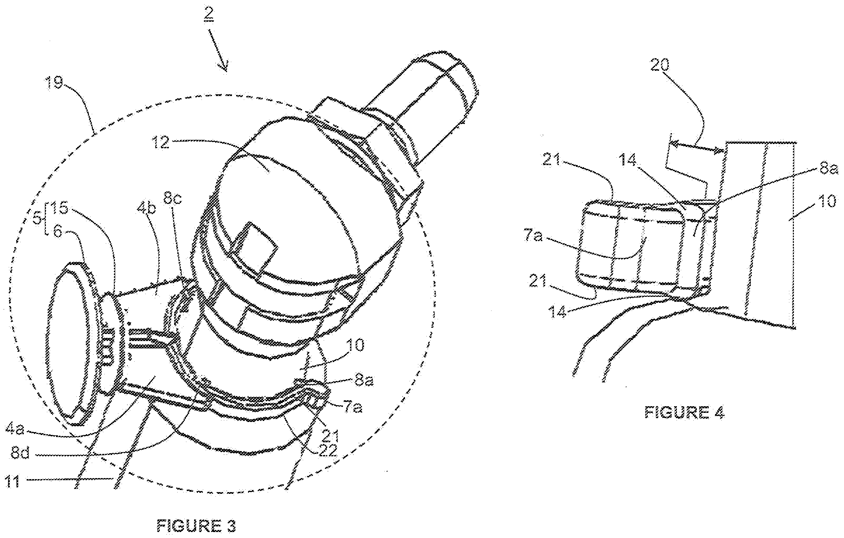

- la figure 3 représente l'élément d'accrochage fixé sur un vérin d'un véhicule selon ce mode de réalisation de l'invention, et
- la figure 4 est une vue à plus grande échelle de l'élément d'accrochage fixé sur le vérin d'un véhicule selon ce mode de réalisation de l'invention.

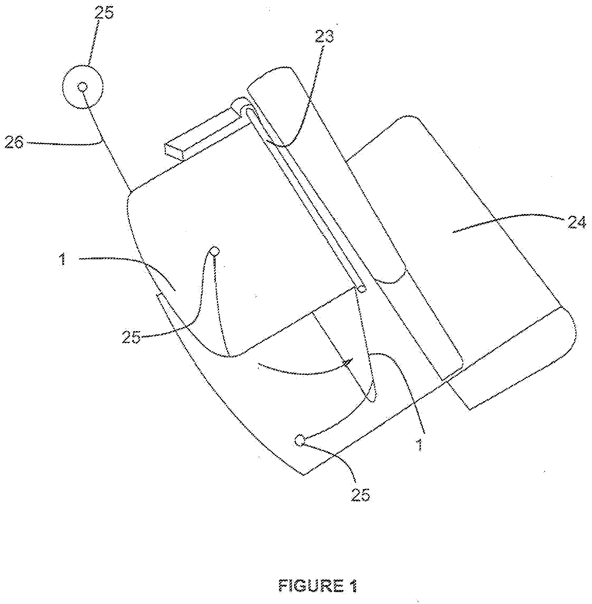

La figure 1 représente une tablette 1 arrière susceptible d'être agencée au niveau du coffre arrière d'un véhicule entre une rangée de sièges arrière 24 et une porte de coffre arrière du véhicule appelée hayon.
La tablette 1 est constituée d'une toile tendue sur un cadre rigide sensiblement rectangulaire.

Des coins arrière de la tablette 1 comportent chacun des moyens d'attache, constitués par un cordon 26 par exemple, dont une extrémité est reliée à un élément d'accrochage 25 destiné à être monté sur un vérin 2 d'aide à l'ouverture du hayon disposé le long d'un bord latéral de la tablette 1.
Le vérin 2 relie la carrosserie du véhicule à la partie articulée de cette carrosserie telle que la porte de coffre ou une lunette arrière ouvrante montée mobile par rapport à la carrosserie autour d'un axe de pivotement s'étendant transversalement à l'axe longitudinal du véhicule.

Le vérin 2 comprend de manière non exhaustive et non limitative une tige solidaire d'un piston (non représentée) qui est susceptible de coulisser dans un fût 11 cylindrique afin de l'allonger.

A cet effet, le vérin 2 comporte un ressort à huile voire à gaz comprimé qui tend à réaliser cet allongement par coulissement jusqu'à une extension maximale, déterminée par une butée interne, où le ressort est encore suffisamment contraint pour supporter et maintenir la partie articulée, le hayon, dans différentes positions.

Une extrémité 19 du fût 11 du vérin 2 comporte une tête 12 de fixation destinée à être montée par vissage à la partie articulée de la carrosserie La tête 12 est fixée sur le fût 11 cylindrique par l'intermédiaire d'un col 10 dont les dimensions sont inférieures à celles de la tête 12. L'extrémité de la tige (non représentée) est quant à elle reliée à une partie latérale fixe de la carrosserie

Ainsi, la tablette 1, dont un bord avant est monté à rotation autour d'un axe transversal 23 situé sensiblement le long des dossiers de siège arrière 24 est apte à occuper une position normale d'utilisation dans laquelle elle s'étend horizontalement, et une position relevée dans laquelle elle a pivoté autour de son axe 23, les coins arrière ayant été soulevés par les moyens d'attache lors de l'ouverture de l'ouvrant arrière.

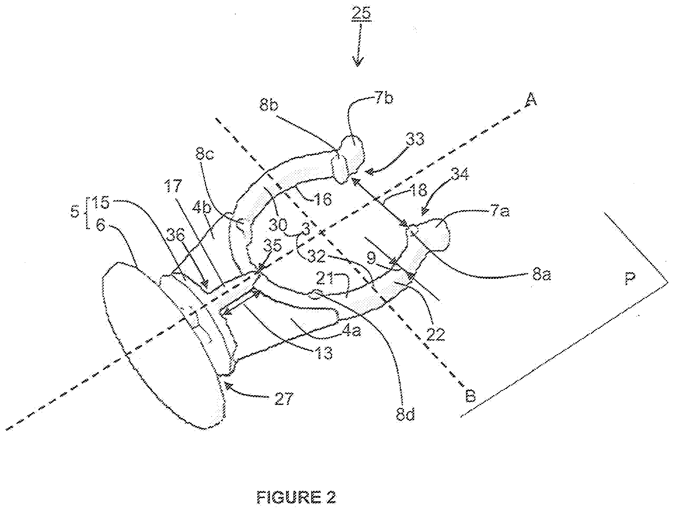

Tel que représenté à la figure 2, l'élément d'accrochage 25 est réalisé en polymère, en particulier en une matière thermoplastique appartenant à la famille des polyéthers et pouvant par exemple correspondre à un polyoxyméthylène (ou polyformaldéhyde), plus connu sous le sigle « POM ».

Le POM est un polymère dur, tenace et rigide qui présente une excellente résistance à l'abrasion et aux frottements, une bonne résistance chimique ainsi qu'une bonne tenue géométrique à la chaleur.

Cet élément d'accrochage 25 comporte :
- un corps 17;
- des ailes de renfort 4a et 4b ;
- une partie de retenue 5 du cordon 26, et
- une partie de connexion 3 au vérin 2.

Le corps 17 correspond à la partie centrale de cet élément d'accrochage 25 sur lequel sont agencés la partie de connexion 3, les ailes de renfort 4a et 4b, et la partie de retenue 5.

La partie de connexion 3 est constituée de deux bras 30 et 32 en forme d'arcs de cercle s'étendant dans un plan P depuis une extrémité 35 du corps 17.

Les extrémités 33 et 34 des bras 30 et 32 définissent entre elles une ouverture 18 et sont recourbées vers l'extérieur de façon à former un retour 7a, 7b constituant des éléments de guidage

Cette ouverture 18 est susceptible de varier grâce notamment aux propriétés de flexibilité de la partie de connexion 3.

La partie de connexion 3 présente une face interne 16, localisée sur une zone interne des bras 30 et 32 ainsi que deux faces latérales 21 opposées s'étendant sensiblement dans un plan parallèle au plan P.

La partie de connexion 3 peut comporter au niveau de sa face 16 intérieure au moins une butée 8a, 8b, 8c, 8d présentant une forme semi cylindrique d'axe perpendiculaire au plan P, et comportant des extrémités 14 formant saillie dans les faces latérales 21 de la partie de connexion 3. Ces extrémités 14 peuvent avoir une forme semi-sphérique.

Dans le présent mode de réalisation, la partie de connexion 3 comprend quatre butées 8a, 8b, 8c, 8d.

Une butée 8a, 8b, 8c, 8d peut aussi correspondre par exemple à un godron de forme ovoïde.

La partie de connexion 3 peut avoir une épaisseur 9 comprise entre environ 0,5 et 1,5 mm. De préférence l'épaisseur 9 est de l'ordre de 1,2 mm.

Les butées de contacts 8a et 8b sont disposées au niveau des extrémités 33 et 34 des bras 30 et 32 tandis que les butées 8c et 8d sont agencées à proximité de la zone de rattachement de la partie 3 au corps 17. Les butées d'extrémités 8a et 8b et les butées 8c et 8d sont disposées sensiblement symétriquement par rapport à un axe A passant par le corps 17 et par rapport à un axe B, perpendiculaire à l'axe A,

Une extrémité 36 du corps 17 de l'élément d'accrochage 25 opposée à l'extrémité 35 comporte la partie de retenue 5 du cordon 26.

La partie de retenue 5 du cordon 26 est constituée de deux parois parallèles entre elles, Une paroi interne 15, directement rattachée à l'extrémité 36 du corps 17 et une paroi terminale 6 éloignée de l'extrémité 36. Les parois 6 et 15 sont orientées selon un plan perpendiculaire à l'axe du corps 17 et reliées entre elles par un plot central de façon qu'elles définissent entre elles une gorge 27.

Ces deux parois 6 et 15 peuvent avoir une forme circulaire et présenter des diamètres différents, le diamètre de la première paroi 6 pouvant être supérieur à celui de la deuxième paroi 15.

La première paroi 6, peut avoir un diamètre compris entre environ 10 et 24 mm. De préférence elle peut être de 16 mm.

La deuxième paroi 15 peut avoir un diamètre compris entre environ 10 et 20 mm. De préférence elle peut être de 12 mm.

Ainsi une extrémité du cordon 26 en forme de boucle peut être engagée de manière amovible dans la gorge 27 formée dans la partie de retenue 5.

L'utilisateur peut ainsi solidariser/désolidariser la tablette 1 arrière de l'élément d'accrochage 25 selon ses besoins.

Dans d'autres modes de réalisation, la partie de retenue 5 peut avoir la forme d'un crochet coudé ou d'une encoche réalisée à l'extrémité du corps 17.

Le corps 17 de l'élément d'accrochage 25 comprend également les ailettes de renfort latérales 4a et 4b s'étendant depuis une face externe 22 de la partie de connexion 3 jusqu'à la deuxième paroi 15. Les ailettes 4a et 4b permettent de rigidifier le corps 17. Les ailettes 4a et 4b peuvent avoir la forme d'un quadrilatère et s'étendent selon le plan P.

Le corps 17 présente l'avantage de permettre de maintenir la partie de retenue 5 du cordon 26 à une distance suffisante de la partie de connexion 3 pour éviter que le cordon 26 ne soit en contact avec le vérin 2. Cette distance est définie par la longueur 13 du corps 17 qui est comprise entre environ 4 et 6 mm. De préférence cette longueur 13 est de l'ordre de 5 mm.

La partie de connexion 3 de l'élément d'accrochage 25 est destinée à être montée sur le col 10 de la tête 12 de vérin.

Le montage de l'élément d'accrochage 25 s'effectue en appliquant l'ouverture 18 contre la surface du col 10, les dimensions de l'ouverture 18 étant inférieures au diamètre du col 10 lorsque les bras 30 et 32 sont au repos.

Les éléments de guidage 7a, 7b sont alors mis en contact avec la surface du col 10 et permettent de faciliter l'insertion de la partie de connexion 3.

Etant constitués d'une matière élastiquement déformable, les bras 30 et 32 s'écartent au fur et à mesure que les éléments de guidage 7a et 7b et les extrémités 33 et 34 des bras 30 et 32 glissent le long de la surface du col 10 jusqu'à ce que les bras 30 et 32 se rapprochent à nouveau et que le col 10 soit entièrement inséré entre les bras 30 et 32.

Les bras 30 et 32 sont alors en appui sous contrainte contre la surface du col 10 ce qui assure la fixation de l'élément d'accrochage 25 sur le col 10.

Par ailleurs, la surface du col 10 est en contact avec les butées 8a, 8b, 8c et 8d ce qui permet d'éviter le coincement de la partie de connexion 3 en assurant son glissement le long de la surface du col 10 pour qu'il puisse suivre les mouvements du cordon 26 lors de l'ouverture du hayon.

En outre, lorsque l'élément d'accrochage 25 est en place sur le col 10, la forme bombée de chaque extrémité 14 en saillie par rapport à la face latérale 21 des butées de contact 8a, 8b, 8c, 8d, de la partie de connexion 3, permet à chaque butée 8a, 8b, 8c, 8d de prendre appui sur l'extrémité 19 du cylindre 11 du vérin 2 et de créer ainsi un jeu 20 entre la partie de connexion 3 et le col 10 de la tige. Ce jeu 20 peut mesurer environ 0,1 à 0,3 mm et est de préférence de 0,2mm.

La partie de connexion 3 est donc accrochée au col 10 tout en étant apte à tourner sans difficulté autour du col 10, les risques de coincement avec l'extrémité 19 du fût 11 et la surface du col 10 étant réduits par la présence des butées de contact 8a, 8b, 8c et 8d.

Ainsi lorsque la tablette 1 se relève lors de l'ouverture de l'ouvrant, les éléments d'accrochage 25 restent bien en place sur le col 10, mais tournent tout autour pour permettre le pivotement de la tablette 1 autour de son axe transversal 23.

On remarquera également que l'élément d'accrochage 25 peut aisément être désolidarisé de la tige, par exemple par déclippage, si une force de traction suffisante est exercée sur cet élément d'accrochage 25 et en particulier sur la zone d'accrochage 5.

Cette caractéristique de l'élément d'accrochage 25 revêt un avantage particulier en évitant notamment que la tablette 1 ne se brise ou ne se déforme sous l'effet par exemple du poids conjugué d'un objet de plus 500g et de la tablette 1.
Cette force de traction exercée sur les éléments d'accrochage 25 peut être comprise entre 3 et 12 N. Elle est de préférence de 5 N par élément d'accrochage 25.

Ainsi, lorsqu'un utilisateur charge un objet trop lourd sur la tablette 1, c'est-à-dire exerçant une force de traction supérieure au seuil prédéterminé, les bras 30 et 32 de la partie de connexion 3 glissent le long de la surface du col 10 et s'écartent jusqu'à ce que l'ouverture 18 soit égale au diamètre du col 10 puis se rapprochent à nouveau pour reprendre leur position initiale une fois la partie de connexion 3 séparée du col 10. Les éléments d'accrochage 25 étant déclippés du col 10 de la tête de vérin 12, la tablette 1 se détache et reste alors suspendue par son axe de rotation.

Il peut être utile d'apposer une consigne sur la tablette 1 de façon à rappeler à l'utilisateur qu'une charge trop importante entraîne le déclippage des éléments d'accrochage 25.

Une fois la tablette 1 détachée, l'utilisateur peut bien entendu clipper à nouveau les éléments d'accrochage 25 sur les vérins et remettre la tablette 1 en place, puisqu'aucun élément n'a été détérioré.

## Revendications

1. Coffre de véhicule automobile avec une tablette (1) comportant un bord avant monté pivotant autour d'un axe transversal (23) et des coins arrière comportant des moyens d'attache reliés à un ouvrant de coffre, la tablette (1) étant apte à passer, lorsque l'ouvrant est ouvert, d'une position horizontale d'utilisation à une position relevée par une rotation vers le haut autour de l'axe transversal (23) **caractérisée en ce que** les moyens d'attache sont conformés pour se détacher lorsqu'une charge dont la masse est supérieure à un seuil prédéfini est appliquée sur la tablette (1) de façon que la tablette (1) passe de sa position d'utilisation à une position abaissée par une rotation vers le bas autour de l'axe transversal (23).

2. Coffre selon la revendication 1, **caractérisée en ce que** chaque moyen d'attache est constitué par un cordon (26) dont une première extrémité est reliée à un coin de la tablette (1) et une deuxième extrémité est reliée à un élément d'accrochage (25) apte à être monté sur une tête (12) de vérin d'ouvrant de coffre.

3. Coffre selon la revendication 2, **caractérisée en ce que** l'élément d'accrochage (25) comporte un corps (17) présentant une extrémité (35) depuis laquelle s'étend une partie de connexion (3) apte à coopérer avec la tête (12) de vérin et une extrémité opposée (36) depuis laquelle s'étend une partie de retenue (5) apte à coopérer avec l'extrémité du cordon (26).

4. Coffre selon la revendication 3, **caractérisée en ce que** la partie de connexion (3) est formée par deux bras élastiquement déformables (30, 32) s'étendant en arcs de cercle dans un plan (P) et présentant des extrémités (33, 34) délimitant une ouverture (18), les bras étant aptes à enserrer le col (10) lorsque le poids appliqué à la tablette (1) est inférieur à un seuil prédéfini.

5. Coffre selon la revendication 4, **caractérisée en ce que** les extrémités (33, 34) des bras (30, 32) comportent un retour (7a, 7b) tourné vers l'extérieur formant des moyens de guidage.

6. Coffre selon l'une des revendications 4 ou 5, **caractérisée en ce qu**'une face interne (16) des bras (30, 32) comporte des butées (8a, 8b, 8c, 8d) de contact aptes à coopérer avec une surface du col (10) de tête (12) de vérin.

7. Coffre selon l'une quelconque des revendications 4 à 6, **caractérisée en ce que** des butées (8a, 8b, 8c,8d) présentent la forme d'une portion de cylindre d'axe perpendiculaire au plan (P) dont les extrémités sont en saillie par rapport à une face latérale des bras (30, 32) et présentent une forme semi-sphérique de façon à être aptes à entrer en contact avec une face d'extrémité du fût (11) du vérin (2).

8. Coffre selon l'une quelconque des revendications 3 à 7, **caractérisée en ce qu**'une partie de retenue (5) est constituée par des parois sensiblement perpendiculaires au corps (17) et formant entre elles une gorge (27) apte à recevoir une extrémité en forme de boucle du cordon (26).

9. Véhicule comportant une tablette selon l'une quelconque des revendications précédentes.

## Patentansprüche

1. Kraftfahrzeugkofferraum mit einer Ablageplatte (1), umfassend
einen vorderen Rand, der schwenkend um eine Querachse (23) montiert ist, und hintere Ecken, die Anbringmittel umfassen, die mit einem Kofferraumdeckel verbunden sind, wobei die Ablageplatte (1) geeignet ist, bei geöffnetem Deckel durch eine Drehung um die Querachse (23) nach oben aus einer horizontalen Gebrauchsposition in eine erhöhte Position zu gehen, **dadurch gekennzeichnet, dass** die Anbringmittel ausgebildet sind, sich zu lösen, wenn die Ablageplatte (1) mit einer Last beaufschlagt wird, deren Masse über einer vordefinierten Schwelle liegt, so dass die Ablageplatte (1) durch eine Drehung um die Querachse (23) nach unten aus ihrer Gebrauchsposition in eine abgesenkte Position geht.

2. Kofferraum nach Anspruch 1, **dadurch gekennzeichnet, dass** jedes Anbringmittel aus einer Schnur (26) besteht, deren erstes Ende mit einer Ecke der Ablageplatte (1) verbunden ist und deren zweites Ende mit einem Einhängeelement (25) verbunden ist, das geeignet ist, am Kofferraumdeckelzylinderkopf (12) montiert zu sein.

3. Kofferraum nach Anspruch 2, **dadurch gekennzeichnet, dass** das Einhängeelement (25) einen Körper (17) aufweist, der ein Ende (35) hat, von dem aus sich ein Verbindungsteil (3) erstreckt, das geeignet ist, mit dem Zylinderkopf (12) zusammenzuwirken, sowie ein gegenüberliegendes Ende (36), von dem aus sich ein Halteteil (5) erstreckt, das geeignet ist, mit dem Ende der Schnur (26) zusammenzuwirken.

4. Kofferraum nach Anspruch 3, **dadurch gekennzeichnet, dass** das Verbindungsteil (3) durch zwei elastisch deformierbare Arme (30, 32) gebildet ist, die sich kreisbogenförmig in einer Ebene (P) erstrecken und Enden (33, 34) haben, die eine Öffnung (18) begrenzen, wobei die Arme geeignet sind, den Hals (10) zu umschließen, wenn das Gewicht, mit dem die Ablageplatte (1) beaufschlagt wird, unter einer vordefinierten Schwelle liegt.

5. Kofferraum nach Anspruch 4, **dadurch gekennzeichnet, dass** die Enden (33, 34) der Arme (30, 32) einen nach außen gewandten Rücksprung (7a, 7b) aufweisen, der Führungsmittel bildet.

6. Kofferraum nach einem der Ansprüche 4 oder 5, **dadurch gekennzeichnet, dass** eine innere Fläche (16) der Arme (30, 32) Kontaktanschläge (8a, 8b, 8c, 8d) aufweist, die geeignet sind, mit einer Oberfläche des Halses (10) des Zylinderkopfs (12) zusammenzuwirken.

7. Kofferraum nach einem der Ansprüche 4 bis 6, **dadurch gekennzeichnet, dass** die Anschläge (8a, 8b, 8c, 8d) die Form eines Zylinderabschnitts mit senkrechter Achse in der Ebene (P) haben, dessen Enden bezüglich einer Seitenfläche der Arme (30, 32) vorstehen und halbkugelförmig sind, so dass sie geeignet sind, mit einer Endfläche des Schafts (11) des Zylinders (2) in Kontakt zu treten.

8. Kofferraum nach einem der Ansprüche 3 bis 7, **dadurch gekennzeichnet, dass** ein Halteteil (5) aus zum Körper (17) im Wesentlichen senkrechten Wänden besteht, die zwischen sich eine Kehle (27) bilden, die zur Aufnahme eines schlaufenförmigen Endes der Schnur (26) geeignet ist.

9. Fahrzeug, umfassend eine Ablageplatte nach einem der vorhergehenden Ansprüche.

## Claims

1. Motor vehicle boot having a shelf (1) comprising a front edge mounted so as to be able to pivot about a transverse axis (23), and rear corners comprising attachment means connected to an opening leaf of the boot, the shelf (1) being able to move, when the opening leaf is opened, from a horizontal use position to a raised position by rotating upward about the transverse axis (23), **characterized in that** the attachment means are shaped so as to detach when a load of mass greater than a predefined limit is applied to the shelf (1), such that the shelf (1) passes from it use position to a lowered position by rotating downward about the transverse axis (23).

2. Boot according to Claim 1, **characterized in that** each attachment means consists of a cord (26) of which a first end is connected to a corner of the shelf (1) and a second end is connected to a latching element (25) that can be mounted on a boot opening leaf actuator head (12).

3. Boot according to Claim 2, **characterized in that** the latching element (25) comprises a body (17) having one end (35), whence extends a connecting part (3) that can engage with the actuator head (12), and an opposite end (36), whence extends a retaining part (5) that can engage with the end of the cord (26).

4. Boot according to Claim 3, **characterized in that** the connecting part (3) consists of two elastically deformable arms (30, 32) extending in the form of arcs of a circle in a plane (P) and having ends (33, 34) that delimit an opening (18), the arms being able to wrap around the neck (10) when the weight applied to the shelf (1) is below a predefined limit.

5. Boot according to Claim 4, **characterized in that** the ends (33, 34) of the arms (30, 32) comprise an outward-oriented return (7a, 7b) forming guiding means.

6. Boot according to one of Claims 4 and 5, **characterized in that** an inner face (16) of the arms (30, 32) comprises contact stops (8a, 8b, 8c, 8d) that can engage with a surface of the neck (10) of the actuator head (12).

7. Boot according to any one of Claims 4 to 6, **characterized in that** stops (8a, 8b, 8c, 8d) are in the shape of a portion of a cylinder of axis perpendicular to the plane (P) whence the ends project with respect to a lateral face of the arms (30, 32) and have a semi-spherical shape so as to be able to contact an end face of the cylinder (11) of the actuator (2).

8. Boot according to any one of Claims 3 to 7, **characterized in that** a retaining part (5) consists of walls that are essentially perpendicular to the body (17) and form between them a channel (27) that is able to receive a loop-shaped end of the cord (26).

9. Vehicle comprising a shelf according to any one of the preceding claims.
